# FASCICULE DE BREVET EUROPEEN

(11) **EP 0 851 135 B1**
(45) Date de publication et mention de la délivrance du brevet: **06.03.2002**
(21) Numéro de dépôt: 97122527.1
(22) Date de dépôt: 19.12.1997
(51) Int. Cl.: F16D 13/71

(54) **Mécanisme d'embrayage à languettes élastiques notamment pour véhicules automobiles**
Kupplungsvorrichtung mit Federstreifen, insbesondere für Kraftfahrzeuge
Clutch device with elastic strips, especially for automotive vehicles

(30) Priorité: 23.12.1996 FR 9616029
(43) Date de publication de la demande: 01.07.1998
(73) Titulaire: VALEO, 75017 Paris (FR)
(72) Inventeur: Hagnere, Raymond, 80080 Amiens (FR); Ruguet, René, 62700 Bruay La Buissiere (FR)
(74) Mandataire: Gamonal, Didier

(56) Documents cités:
- FR-A- 1 502 107
- FR-A- 1 554 782
- FR-A- 1 580 169
- FR-A- 2 351 314
- FR-A- 2 370 892
- GB-A- 2 176 549
- US-A- 3 283 864
- US-A- 4 241 820
- US-A- 5 358 085

## Description

La présente invention concerne les embrayages à friction, notamment pour véhicules automobiles, comportant un ou plusieurs disques de friction et plateaux de pression.

La présente invention concerne plus particulièrement les mécanismes d'embrayage que comporte, de manière unitaire, un tel embrayage.

Ainsi qu'on le sait un mécanisme d'embrayage, tel que décrit dans le document US-A-3,499,512, comporte un couvercle annulaire de forme creuse, pour fixation du mécanisme d'embrayage à un plateau de réaction, un diaphragme à périphérie externe en forme de rondelle Belleville montée de manière pivotante sur le couvercle à l'aide de colonnettes, un plateau de pression soumis à l'action du diaphragme et présentant pour ce faire un bossage pour appui de la périphérie externe de la rondelle Belleville du diaphragme, des languettes élastiques, d'orientation tangentielle, liant en rotation le plateau de pression au couvercle avec mobilité axiale, dans lequel les colonnettes présentent des têtes profilées pour former un appui secondaire pour la périphérie interne de la rondelle Belleville du diaphragme en regard d'un appui primaire porté par le fond que présente le couvercle.

Les colonnettes précitées permettent de réduire l'encombrement axial du mécanisme d'embrayage et sont fixées au fond du couvercle.

Classiquement les languettes tangentielles sont fixées par rivetage respectivement à des pattes saillantes radialement, que présente le plateau de pression à sa périphérie externe, et à un rebord radial que présente le couvercle à sa périphérie externe.

Il en résulte une augmentation de l'encombrement radial du plateau de pression à cause de ses pattes.

L'invention a pour objet de réduire l'encombrement radial du plateau de pression, tout en bénéficiant d'une solution à colonnettes à tête profilée.

Suivant l'invention un embrayage du type sus-indiqué, dans lequel les colonnettes sont implantées radialement en-dessous du bossage d'appui du plateau de pression et dans lequel le diaphragme présente des orifices élargis, au voisinage de la périphérie interne de sa rondelle Belleville, traversés par les colonnettes, est caractérisé en ce que les languettes élastiques sont implantées axialement entre le plateau de pression et les têtes des colonnettes et radialement en dessous du bossage d'appui du plateau de pression, en ce que lesdites languettes sont fixées au fond du couvercle à l'aide d'entretoises traversant lesdits orifices élargis du diaphragme et en ce que les entretoises sont plus longues axialement que les colonnettes.

Grâce à l'invention le plateau de pression est dépourvu de pattes saillantes de fixation et on ne modifie pas les colonnettes grâce aux entretoises.

Avantageusement les languettes passent devant les têtes des colonnettes et en sont fixées au plateau de pression à l'aide d'organes de fixation implantés axialement chacun en vis-à-vis d'un orifice élargi du diaphragme.

Ainsi les languettes s'étendent entre deux orifices élargis du diaphragme, et ce de part et d'autre d'une colonnette à tête profilée.

Ces orifices concernés s'étendent de manière non symétrique par rapport aux colonnettes de manière à avoir la longueur voulue par les languettes élastiques.

Ainsi on fixe le diaphragme au couvercle à l'aide des colonnettes, dans une seconde étape, on fixe les languettes au couvercle à l'aide des entretoises et enfin, à l'aide de trous ménagés dans le couvercle en coincidence axiale avec les orifices associés aux organes de fixation, on fixe le plateau de pression, par exemple par rivetage, aux languettes.

Les organes de fixation affectent la face de friction du plateau de pression.

Grâce à ces dispositions le plateau de pression est simplifié, ainsi que le couvercle, puisque la fixation des languettes est réalisée sur le fond du couvercle.

L'embrayage peut tourner à grande vitesse de rotation et comporter deux disques de friction pour être encore plus compacts radialement.

En effet le couvercle à une jupe intacte du fait de la fixation selon l'invention des languettes, en sorte que ladite jupe est suffisamment résistante pour que l'on puisse entraîner l'autre plateau de pression par la jupe à l'aide d'une liaison du type tenons-mortaises, les mortaises étant formées par des fentes axiales borgnes réalisées dans la jupe périphérique du couvercle.

Il est possible de former les mortaises par le plateau de réaction et de former un module unitaire comprenant le mécanisme d'embrayage selon l'invention, un autre plateau de pression, le plateau de réaction et deux disques de friction.

Le couvercle peut être fixé par sertissage au plateau de réaction. La solidité du couvercle permet de fixer le plateau de réaction périphériquement en plusieurs points à un flasque d'entraînement ou à une poulie - à un flasque de celle-ci - à l'aide par exemple de vis de fixation engagées dans des trous du plateau de réaction, tout en étant compacts radialement.

En effet on peut fendre la jupe pour passage d'un outil de fixation permettant d'accéder aux têtes des vis de fixation du plateau de réaction, au flasque ou à la poulie.

Dans tous les cas on tire parti de la cavité délimitée axialement par le diaphragme et son plateau de pression associé pour implanter les languettes, ladite cavité étant délimitée radialement vers l'extérieur par les bossages du plateau de pression, en étant ouverte radialement vers l'intérieur.

Les languettes tangentielles sont donc masquées et protégées.

Les entretoises peuvent être issues par emboutissage du fond du couvercle. De préférence elles sont rapportées sur le couvercle pour modifier le moins possible celui-ci.

La description qui va suivre illustre l'invention en regard des dessins annexés dans lesquels :
- la figure 1 est une vue arrière de l'embrayage selon l'invention ;
- les figures 2 et 3 sont des vues en coupe à plus grande échelle suivant les lignes 2-2 et 3-3 de la figure 1.

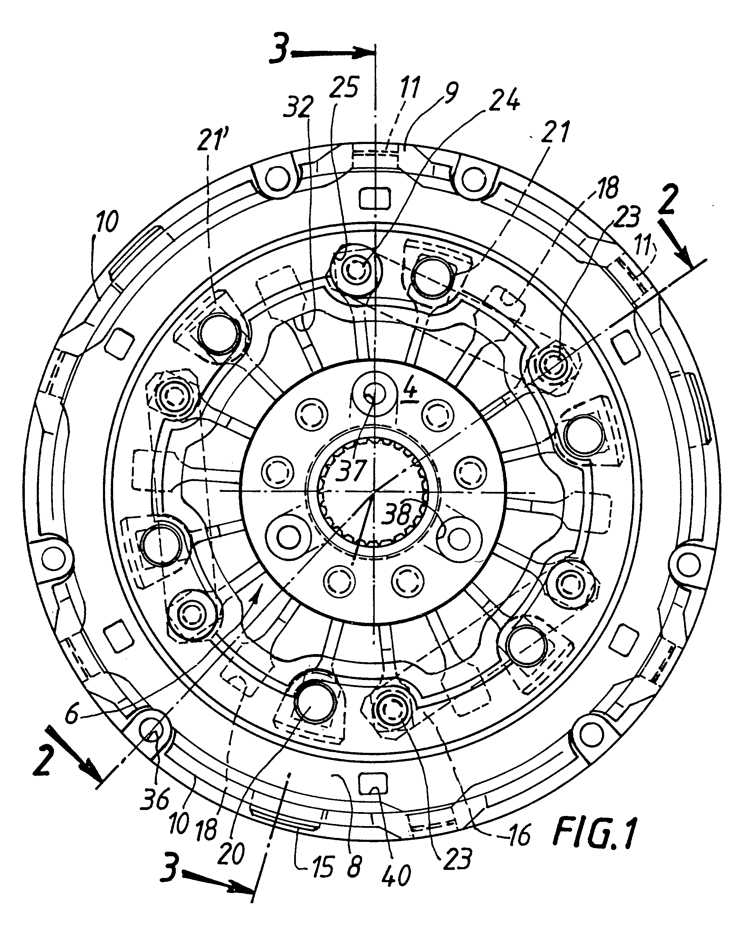

Dans les figures on a représenté un embrayage à friction comportant un ensemble de pièces annulaires à savoir, successivement axialement d'avant en arrière (figure 1), un plateau de réaction 1, un premier disque de friction 2, un plateau de pression intermédiaire 3, un second disque de friction 4, un plateau de pression terminal 5, un diaphragme 6 et un couvercle 7 de forme creuse servant ici de logement au diaphragme 6, aux plateaux 3,5 et aux disques 2,4.

Les plateaux de réaction 1 et de pression 3,5 sont en matière moulée, ici en fonte.

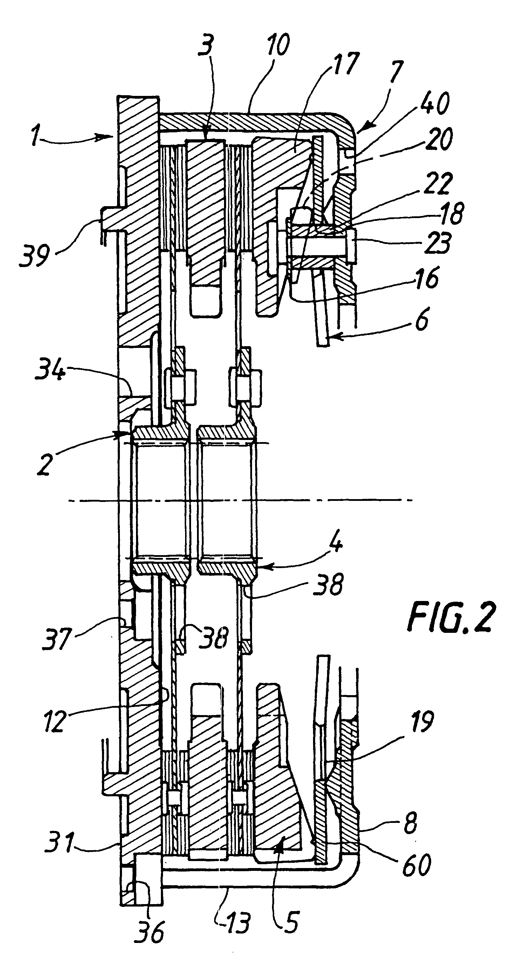

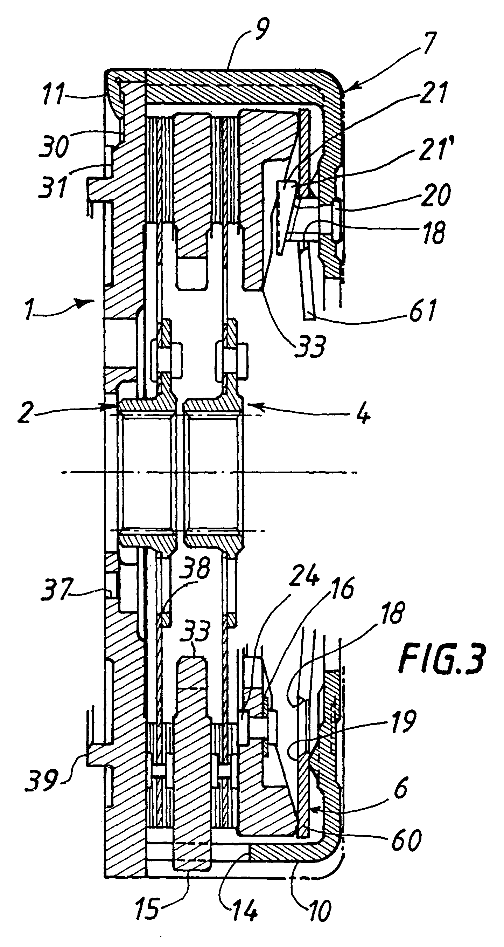

Les disques de friction 2,4 sont ici du type rigide en étant identiques. Ils présentent à leur périphérie externe (figures 2 et 3) deux garnitures de friction s'étendant de part et d'autre d'un disque de support fixé, ici par rivetage, à un voile d'un seul tenant avec un moyeu cannelé intérieurement pour liaison en rotation du disque de friction avec un premier arbre.

En variante les garnitures de friction peuvent être accouplées élastiquement au moyeu.

Le diaphragme 6 prend appui sur le couvercle 7 pour action sur le plateau de pression terminal 5 et serrage des garnitures de friction des disques de friction 2,4 entre les plateaux 1,3,5.

Pour ce faire le plateau de pression intermédiaire 3 présente frontalement et dorsalement une face de friction, tandis que les plateaux de réaction 1 et de pression terminal 5 présentent une face de friction respectivement dorsalement et frontalement.

Normalement l'embrayage est, de manière connue, engagé et il n'y a aucune transmission de couple entre le premier arbre, solidaire en rotation des disques de friction 2,4, et un second arbre solidaire en rotation, de manière décrite ci-après, du plateau de réaction 1.

Ici l'embrayage tourne à de grandes vitesses de rotation et est compact radialement, en sorte qu'il comporte deux disques de friction.

L'embrayage est conformé pour former un module unitaire. A cet effet le couvercle 7 est rapporté par sertissage sur la périphérie externe du plateau de réaction 1.

Ce couvercle 7, ici en tôle emboutie, présente un fond 8 troué centralement d'orientation transversale. Ce fond 8 est prolongé à sa périphérie externe par une jupe annulaire d'orientation axiale fragmentée ici en secteurs annulaires 9,10.

Certains secteurs 9 présentent, à leur extrémité libre, chacun une patte 11 d'épaisseur réduite. Les autres secteurs 10 sont admis à venir en appui par la tranche de leur extrémité libre contre la face dorsale 12 du plateau de réaction 1 formant, de manière précitée, une face de friction pour le premier disque de friction 2. Bien entendu, pour ce faire la jupe 9,10 entoure les garnitures de friction des disques de friction 2,4. Cette jupe entoure également le plateau de pression terminal 5 et la partie principale du plateau de pression intermédiaire 3.

Les secteurs 9 sont décalés radialement vers l'extérieur par rapport aux secteurs 10. Le nombre de secteurs 9,10 dépend des applications.

Les secteurs 9 sont répartis circonférentiellement de manière régulière, deux secteurs consécutifs 9 étant reliés entre eux par un secteur 10.

Les secteurs 10, dits ci-après seconds secteurs, présentent, d'une part, des fentes axiales 13 affectant axialement la jupe 9,10 sur toute sa longueur (figure 2) et, d'autre part, des fentes axiales borgnes 14 (figure 3) affectant axialement la jupe 9,10 sur une partie de sa longueur.

Les fentes borgnes 14 sont ouvertes à l'extrémité libre des seconds secteurs 10 et forment des mortaises. Le plateau de pression intermédiaire 3 présente, en correspondance avec les fentes 14, des pattes 15 saillantes radialement vers l'extérieur. Les pattes 15 forment des tenons engagés dans les mortaises 14. Le plateau de pression intermédiaire 3 est ainsi lié en rotation au couvercle 7 et ce avec une liberté de déplacement axial. Le plateau de pression terminal 5 est également lié en rotation au couvercle 7 avec une liberté de déplacement axial à l'aide de languettes élastiques 16, d'orientation tangentielle, exerçant une force de rappel, en direction du fond 8 du couvercle 7, sur le plateau de pression terminal 5.

On notera que les pattes 15 s'étendent radialement, d'une part au-delà des fentes 14 et, d'autre part, en-deçà de la périphérie externe du plateau de réaction 1 et des secteurs 9, dits ci-après premiers secteurs.

Suivant une caractéristique les languettes 16 s'étendent radialement à l'intérieur du couvercle 7, et ce radialement en-dessous de la périphérie externe du plateau de pression terminal 5.

Cette périphérie externe est conformée pour offrir, en saillie axiale, un appui 17 au diaphragme 7.

A cet effet l'appui 17 est arrondi à son extrémité libre pour contact local avec le diaphragme 6, qui ainsi qu'on le sait présente une partie périphérique en forme de rondelle Belleville 60 prolongée radialement vers le centre par une partie centrale fragmentée en doigts radiaux 61 par des fentes comme visible à la figure 1.

Les fentes débouchent intérieurement dans l'ouverture centrale du diaphragme 6 de forme tronconique à l'état libre. Ces fentes sont borgnes et débouchent ainsi extérieurement dans des orifices élargis 18 implantés au voisinage de la périphérie interne de la rondelle Belleville 60 du diaphragme 6. Ces orifices 18 forment le fond des fentes et ont ici en section une forme globalement rectangulaire.

A l'état embrayage engagé le diaphragme 6 prend appui sur un appui primaire 19 porté par le couvercle 7. Ici l'appui primaire 19 est de forme annulaire et est réalisé par emboutissage du fond 8 du couvercle 7 pour réduction du nombre des pièces. L'appui 19 est de forme pointue, à arête arrondie, pour appui local sur le diaphragme 6, plus précisément pour appui sur la périphérie interne de la rondelle Belleville du diaphragme en l'occurrence la face de celle-ci tournée vers le fond 8. En variante l'appui primaire 19 consiste en un jonc annulaire porté par le couvercle 7.

Le couvercle 7 porte une colonnette 20, dite colonnette delta. Cette colonnette 20 est du type de celle décrite dans le document US-A-3,499,512 auquel on pourra se reporter pour plus de précisions. Chaque colonnette 20 présente donc une tête 21 profilée avec un bourrelet 21' en forme de secteur annulaire pour former un appui secondaire pour le diaphragme en regard de l'appui primaire. L'appui secondaire 21' est apte à entrer en contact avec la face du diaphragme 6 tournée vers le plateau de pression terminal 5.

C'est la périphérie interne de la rondelle Belleville du diaphragme 6 qui est destinée à venir en contact avec l'appui secondaire 21'. En conséquence la colonnette 20 a une tête 21 durcie compte tenu que l'appui secondaire annulaire est fragmenté en bourrelets 21'. L'appui primaire 19, de plus grande portée n'a pas besoin lui d'être durci. Chaque colonnette 20 présente un fût qui traverse axialement un orifice élargi 18 pour se terminer par un pied riveté sur le fond 18 du couvercle 7.

C'est par la périphérie externe de sa rondelle Belleville que le diaphragme 7 est en contact avec l'appui 17 périphérique externe du plateau terminal 5, et ce radialement au-delà des appuis primaire 19 et secondaire 21'.

Cet appui 17 forme un bossage à la périphérie externe du plateau 5 et est ici fragmenté en secteurs annulaires. Ce bossage 17 est saillant axialement en direction du fond 8 du couvercle 7.

Ainsi le diaphragme 6 est monté de manière pivotante sur le couvercle 7 entre les appuis primaire 19 et secondaire 21' portés par le fond 8 du couvercle 7.

Un jeu fonctionnel existe entre ces appuis pour permettre un pivotement du diaphragme 6.

En position embrayage engagé le diaphragme 6 est, de manière précitée, en contact avec l'appui primaire 19 pour serrer les garnitures de friction des disques de friction 2,4 via les plateaux 1,3,5. Une transmission de couple a lieu entre le premier et le second arbres. Pour désengager l'embrayage on appuie, de manière connue, en poussant à l'aide d'une butée de débrayage (non représentée) sur l'extrémité interne des doigts du diaphragme pour faire pivoter le diaphragme 6, qui est alors en contact avec l'appui secondaire 21'.

Suite à ce pivotement, le diaphragme 6 n'exerce plus d'action sur le plateau de pression terminal 5, en sorte que les disques de friction 2,4 sont libérés, leurs garnitures de friction étant alors libres vis-à-vis des plateaux 1,3 et 5.

Les languettes 16 rappellent alors le plateau terminal 5 en direction du fond 8 du couvercle 7.

On appréciera le faible encombrement axial présent entre le fond 8 du couvercle 7 et les têtes des colonnettes 20. Cet encombrement est très réduit dans les figures car l'appui primaire 19 est réalisé par emboutissage du fond 8 du couvercle 7.

L'invention tire parti de ce faible encombrement axial ainsi que de la constitution du plateau de pression terminal 5 et des orifices élargis 18 du diaphragme 6.

Plus précisément les languettes élastiques 6 sont fixées à l'une de leurs extrémités au fond 8 du couvercle 7, ici à l'aide d'entretoises 22,23 traversant les orifices élargis 18 du diaphragme 6.

A leur autre extrémité les languettes 16 sont fixées au plateau de pression terminal 5 à l'aide d'organes de fixation 24, ici sous forme de rivets, en variante des vis ou des boulons. Ces rivets 24 sont implantés au niveau d'un autre orifice 18 (figure 1).

Le fond 8 du couvercle 7 présente des trous de passage 25 axialement en regard des rivets 24 et des orifices associés 18. Les languettes 16 s'étendent donc d'une de leurs extrémités à l'autre tangentiellement entre deux orifices élargis 18 non consécutifs.

Ces languettes 16 s'étendent, suivant l'invention, axialement entre le plateau de pression 5 et les têtes 21 des colonnettes et radialement en-dessous du bossage 17 du plateau de pression 5.

Suivant une caractéristique les orifices 18 associés aux extrémités des languettes 16 sont disposés de part et d'autre d'un orifice élargi 18 traversé par une colonnette 20, et ce de manière non symétrique afin d'augmenter la longueur desdites languettes.

Bien entendu le nombre de languettes 16 et de colonnettes 20 dépend des applications.

Ainsi les languettes 16 s'étendent, suivant l'invention, axialement devant les têtes des colonnettes 20, c'est-à-dire entre les têtes 21 des colonnettes 20 et la partie principale, d'orientation transversale, du plateau de pression terminal 5.

Les languettes 16 s'étendent radialement en dessous du bossage fractionné 17 dudit plateau 5 dans une cavité ouverte radialement vers l'intérieur et délimitée par le plateau de pression terminal 5 et le diaphragme 6, les bossages 17 fermant partiellement la cavité radialement vers l'extérieur.

Ici les entretoises 22,23 sont plus longues axialement que les colonnettes 20 en étant portées par le fond 8 du couvercle 7 en alternance avec les colonnettes 20.

Ainsi les languettes 16 peuvent s'étendre devant les têtes 21 des colonnettes sans interférer avec celles-ci.

Ici les entretoises sont en deux parties coaxiales de dureté différente à savoir une partie externe 22 engagée dans un orifice élargi 18 et une partie interne 23 de fixation. Cette partie externe est de forme tubulaire, traverse un orifice 18 et est durcie car, comme les colonnettes 20, elle est destinée à venir en contact avec l'un des flancs d'un orifice 18 du diaphragme, qui est une pièce trempée et donc de grande dureté.

La partie interne 23 est engagée dans la partie externe 22 et traverse celle-ci. La partie interne sert à la fixation de l'entretoise 22,23 au fond 8 du couvercle 7 et à la fixation de la languette 16. La partie interne 23 en forme de rivet allongé est moins dure que la partie externe 22.

La tête de la partie interne 23 sert à immobiliser axialement la languette 16, qui est ainsi pincée axialement entre la tête de la partie interne 23 et la partie externe 22 (l'extrémité libre de celle-ci). Le pied de la partie interne 23 est riveté sur le fond 18, le fût de la partie interne traversant, en coïncidence axiale, un trou de la languette 16, l'alésage interne de la partie externe 22 et un trou du fond 8 du couvercle 7.

Ainsi qu'on l'aura compris le couvercle 7, ici léger car en tôle emboutie et peu encombrant radialement, forme avec le diaphragme 6 et le plateau de pression terminal 5, un ensemble unitaire dit mécanisme d'embrayage. Ledit plateau 5 et ledit diaphragme 7 sont complètement entourés par la jupe 9,10 du couvercle 7. Le plateau de pression terminal 5 peut tourner à grande vitesse car il est dépourvu de pattes de fixation à sa périphérie externe comme visible à la figure 1 du document US-A-3,499,512.

Le montage du mécanisme d'embrayage s'effectue en fixant d'abord le diaphragme 6 de manière pivotante sur le fond 8 du couvercle 7 à l'aide de colonnettes 20.

Ensuite on fixe l'extrémité des languettes 16 audit fond 8 à l'aide des entretoises 22,23. Enfin on fixe le plateau de pression terminal sur l'autre extrémité des languettes 16 à l'aide des rivets 24 et des trous 25 réalisés dans le fond 8 axialement en vis-à-vis des rivets 24 en coïncidence axiale avec des orifices élargis 18.

Après cela, en final, on monte le disque de friction 4 au contact du plateau 5, puis on enfile les pattes 15 du plateau intermédiaire 3 dans les fentes borgnes 14, ensuite on monte le disque de friction 2 au contact du plateau de pression 3 et enfin on place le plateau de réaction 1 au contact de la tranche d'extrémité des secteurs 10, et on procède au sertissage des pattes 11 pour former le module.

A cet effet les pattes 11 sont rabattues radialement vers l'intérieur dans des creusures 30 de la face frontale 31 du plateau de réaction 1. Ce plateau 1 est ainsi pincé à sa périphérie externe entre l'épaulement, présent à la zone d'enracinement des pattes 11 avec les premiers secteurs 9, et l'extrémité libre rabattue des pattes 11.

On notera que le plateau de réaction 1 ferme les fentes borgnes 14.

Ici les pattes 11 traversent, de manière complémentaire, des échancrures 28 ménagées à la périphérie externe du plateau de réaction 1, en sorte que le couvercle 6 est lié en rotation au plateau de réaction 1 par coopération de formes. Bien entendu, en variante, les pattes 11 peuvent ne pas être rabattues radialement, les pattes 11 étant alors par exemple soudées sur la face frontale du plateau de réaction après traversée des échancrures.

Grâce à ce type de fixation on réduit l'encombrement radial car aucun rebord radial de fixation n'est prévu.

Ici l'embrayage est de faible taille radiale et c'est la raison pour laquelle il présente deux disques de friction 2,4 pour transmettre le couple souhaité. Les disques de friction 2,4 viennent au plus près de la périphérie interne de la jupe 9,10 et de la périphérie externe du plateau de réaction 1.

En variante l'embrayage peut ne comporter qu'un seul disque de friction en étant plus encombrant radialement.

Dans ce cas les secteurs des bossages 17 ne sont pas forcément implantés à la périphérie externe du plateau de pression 5.

Néanmoins le mécanisme d'embrayage comporte des languettes tangentielles 16 implantées entre les têtes des colonnettes et le plateau de pression comme dans les figures 1 à 3. Dans tous les cas les rivets 24 affectent la face de friction du plateau de pression 5.

En variante le couvercle 7 peut être fixé au plateau de réaction 1 à l'aide de vis, l'extrémité libre de la jupe annulaire présentant un rebord radial dirigé vers l'extérieur comme à la figure 1 du document US-A-3,499,512.

Il n'est donc pas forcément créé un module d'embrayage.

Dans les figures 1 à 3 le fond 8 du couvercle présente (figures 1 et 2) des trous 40 formant une cible d'allumage pour un capteur d'allumage non visible. Ces trous sont implantés radialement au-dessus des colonnettes 20.

Le trou central du fond 8 du couvercle 7 n'est pas circulairement continu. Ce trou présente des échancrures, chacune avec un fond 32 implanté radialement en-dessous d'un secteur du bossage 17. Au niveau du fond 32 de l'échancrure le couvercle est d'épaisseur réduite. Les échancrures à fond 32 et la réduction d'épaisseur du couvercle 7 au droit du fond 32 des échancrures permettent de ventiler le diaphragme 7. Les trous 40 favorisent également la ventilation.

Chaque plateau 3,5 présente à sa périphérie interne des ailettes de ventilation 33 dirigées radialement vers l'intérieur comme décrit dans le document FR-95 13839 du 22 novembre 1995.

Le plateau de réaction 1 présente intérieurement des trous de ventilation 34. En position embrayage désengagé, grâce aux ailettes 33, on ventile bien les garnitures de friction des disques de friction 2,4.

D'une manière générale, grâce aux trous 34, aux ailettes 33, au fond 32, à la réduction d'épaisseur locale du couvercle 6, on obtient une excellente ventilation de l'embrayage en combinaison avec les fentes 13,14 du couvercle 7, fermées par le plateau de réaction 1.

Le plateau de réaction 1 comporte, à sa périphérie externe, des trous étagés 36 dans le prolongement des fentes 13. A sa périphérie interne il présente des trous étagés 37 en regard de trous 38 de plus grande taille pratiqués en coïncidence axiale dans les moyeux des disques de friction 2 et 4.

Le plateau de réaction comporte également des pions 39 saillants axialement par rapport à la face frontale du plateau de réaction 1. Ces pions 39 forment des centreurs pour montage dans des trous de centrage que comporte une poulie associée au deuxième arbre.

En variante il peut s'agir d'un flasque de support solidaire du deuxième arbre. Les trous 36 et 37 sont destinés à la fixation du module à l'aide de vis de fixation sur ladite poulie. C'est la raison pour laquelle la jupe 9,10 présente des fentes 13 pour passage d'un outil de vissage des vis de fixation et accès aux têtes, ici dotées en creux d'une empreinte, desdites vis.

Ici trois trous 37, six trous 36 et trois pions 9 sont prévus (figure 1).

Trois jeux de languettes 16 répartis régulièrement à 120° sont prévus. Chaque jeu peut comporter une ou plusieurs languettes 16 superposées. Six colonnettes 20 et six secteurs 9 à pattes 11 sont prévus ainsi que six échancrures 32 et six trous 40, comme mieux visible à la figure 1.

Bien entendu tout cela dépend des applications. Ici le premier arbre est un arbre mené et la poulie appartient à un variateur de vitesses à poulie variable, le deuxième arbre étant un arbre menant.

En variante le plateau de réaction 1 peut être fixé sur le vilebrequin du moteur du véhicule formant le second arbre, dans ce cas menant, tandis que le premier arbre est l'arbre mené d'entrée de la boîte de vitesses.

D'une manière générale le premier arbre peut être un arbre menant ou un arbre mené et le second arbre être un arbre mené ou menant.

On appréciera la répartition des orifices élargis 18 permettant une bonne ventilation et une bonne fixation des languettes 16 et des colonnettes 20 à tête 21 profilée.

Les orifices 18 sont respectivement axialement en regard des rivets 24, des colonnettes 20, des entretoises 22,23 et des fonds 32 des échancrures.

Ainsi une première série d'orifices 18 du diaphragme 6 est associée au fond 32, une deuxième série d'orifices 18 est associée aux colonnettes tandis qu'une troisième série et une quatrième série d'orifices 18 sont associées aux extrémités des languettes 16, respectivement aux entretoises 22,23 et aux rivets 24.

Entre deux orifices 18 consécutifs de la première série d'orifices 18 on trouve deux orifices 18 consécutifs de la deuxième et de la troisième séries d'orifices 18 ou deux orifices 18 consécutifs de la deuxième et de la quatrième séries d'orifices 18 (figure 1).

On appréciera que les languettes élastiques 16 sont protégées et que le couvercle 7 est plus robuste au niveau du plateau de pression terminal 5 car, contrairement à celui du document US-A-3,499,512, sa jupe n'est pas échancrée pour passage des pattes saillantes du plateau de pression 5. L'absence de telles pattes permet d'équilibrer dynamiquement plus facilement le plateau de pression 5 et facilite sa fabrication.

Bien entendu la face dorsale du plateau de pression 5 est creusée en regard des têtes des entretoises 22,23.

Le fond 8 du couvercle 7 est plus épais au niveau des orifices des deuxième, troisième et quatrième séries d'orifices 18. Au niveau de la première série d'orifice 18 le fond 8 est moins épais, le fond 32 des échancrures étant implanté à la base d'un orifice 18.

Le fond 8 présente ainsi une alternance circonférentielle de zones plus épaisses et moins épaisses, sachant que les fonds 32 des échancrures sont implantés radialement en-dessous d'un secteur annulaire du bossage 17.

D'une manière générale la zone de fixation des entretoises 22,23 et des colonnettes 20 est légèrement décalée axialement en direction du plateau de pression 5 par rapport à la partie principale du fond 8, en sorte que les pieds des colonnettes 20 et des entretoises 22,23 ne font pas saillie axialement par rapport au couvercle.

Bien entendu la présente invention n'est pas limitée aux exemples de réalisation décrits. En particulier les entretoises peuvent être issues directement du fond 8 du couvercle 7 par emboutissage en étant plus longues axialement que les colonnettes pour éviter toute interférence avec lesdites colonnettes comme dans les figures 1 à 3.

## Revendications

1. Mécanisme d'embrayage, notamment pour véhicule automobile, comportant un couvercle (7) de forme creuse à fond (8) troué centralement, pour fixation du mécanisme d'embrayage sur un plateau de réaction (1), un diaphragme (6) à périphérie externe en forme de rondelle Belleville (60) monté de manière pivotante sur le couvercle à l'aide de colonnettes (20), un plateau de pression (5) soumis à l'action du diaphragme (6) et présentant pour ce faire un bossage d'appui (17) pour appui de la périphérie externe de la rondelle Belleville (60) du diaphragme (6), des languettes élastiques (16) - d'orientation tangentielle - liant en rotation le plateau de pression (5) au couvercle (7) avec mobilité axiale et fixées à l'une de leurs extrémités au plateau de pression (5) et à leur autre extrémité au fond (8) du couvercle (7), dans lequel les colonnettes (20) sont fixées au fond (8) du couvercle (7) et présentent des têtes (21) profilées pour former un appui secondaire (21') pour la périphérie interne de la rondelle Belleville (60) du diaphragme (6) en regard d'un appui primaire (19) porté par le fond (8) du couvercle (7), lesdites colonnettes (20) étant implantées radialement en dessous du bossage d'appui (17) du plateau de pression (5) et dans lequel le diaphragme (6) présente des orifices élargis (18), au voisinage de la périphérie interne de sa rondelle Belleville (60) du diaphragme (6) traversés par les colonnettes (20), **caractérisé en ce que** les languettes élastiques (16) sont implantées axialement entre le plateau de pression (5) et les têtes (21) des colonnettes (20) et radialement en-dessous du bossage d'appui (17) du plateau de pression (5), **en ce que** lesdites languettes (16) sont fixées au fond (8) du couvercle (7) à l'aide d'entretoises (22,23) traversant des orifices élargis (18) du diaphragme (6) et **en ce que** les entretoises (22,23) sont plus longues axialement que les colonnettes (20).

2. Mécanisme selon la revendication 1, **caractérisé en ce que** les languettes élastiques (18) s'étendent d'une de leurs extrémités à l'autre tangentiellement entre deux orifices élargis (18) non consécutifs.

3. Mécanisme selon la revendication 1 ou 2, **caractérisé en ce que** les orifices élargis (18) associés aux extrémités des languettes élastiques (16) sont disposés de part et d'autre d'un orifice élargi (18) traversé par une colonnette (20).

4. Mécanisme selon la revendication 3, **caractérisé en ce que** les orifices élargis (18) associés aux extrémités des languettes élastiques (20) sont disposés de manière non symétrique de part et d'autre d'un orifice élargi traversé par une colonnette (20).

5. Mécanisme selon l'une quelconque des revendications 1 à 4, **caractérisé en ce que** les languettes élastiques (16) passent devant les têtes (21) des colonnettes (20).

6. Mécanisme selon l'une quelconque des revendications 1 à 5, **caractérisé en ce que** les entretoises (22,23) sont en deux parties coaxiales, à savoir une partie externe tubulaire (22) traversant un orifice élargi (18) du diaphragme (6) et une partie interne (23) servant à la fixation de l'entretoise (22,23) au fond du couvercle (7) et à la fixation de la languette élastique (17).

7. Mécanisme selon l'une quelconque des revendications 1 à 6, **caractérisé en ce que** les languettes élastiques (16) sont fixées au plateau de pression (5) par des organes de fixation (24) chacun axialement en vis-à-vis d'un trou (25) réalisé dans le fond (8) du couvercle (7) en coïncidence axiale avec un orifice élargi (18) du diaphragme (6).

8. Mécanisme selon l'une quelconque des revendications 1 à 7, **caractérisé en ce que** le trou central du fond (8) du couvercle (7) n'est pas régulier et présente des échancrures avec un fond (32) implanté à la base d'un orifice élargi (18) du diaphragme (6).

9. Mécanisme selon l'une quelconque des revendications 1 à 8, **caractérisé en ce que** le couvercle (7) présente à sa périphérie externe une jupe annulaire d'orientation axiale (9,10) dotée de fentes axiales borgnes (14) pour formation de mortaises et entraînement en rotation d'un second plateau de pression (3).

10. Mécanisme selon l'une quelconque des revendications 1 à 9, **caractérisé en ce que** l'appui primaire (19) est réalisé par emboutissage du fond (8) du couvercle (7) et **en ce que** le couvercle (7) présente à sa périphérie externe une jupe annulaire, d'orientation axiale, entourant complètement le plateau de pression (5).

## Patentansprüche

1. Kupplungsmechanismus, insbesondere für Kraftfahrzeuge, umfassend einen hohlförmigen Deckel (7) mit einem mittig gelochten Boden (8) zur Befestigung des Kupplungsmechanismus an einer Gegenanpreßplatte (1), eine Membranfeder (6) mit einem äußeren Umfang in Form einer Tellerfeder (60), die anhand von Distanzbolzen (20) schwenkbar auf dem Deckel gelagert ist, eine Druckplatte (5), die der Einwirkung der Membranfeder (6) ausgesetzt ist und dazu einen Auflagevorsprung (17) für die Auflage des äußeren Umfangs der Tellerfeder (60) der Membranfeder (6) aufweist, tangential ausgerichtete Federstreifen (16), welche die Druckplatte (5) drehfest und axial beweglich mit dem Deckel (7) verbinden und an einem ihrer Enden an der Druckplatte (5) und an ihrem anderen Ende am Boden (8) des Deckels (7) befestigt sind, wobei die Distanzbolzen (20) am Boden (8) des Deckels (7) befestigt sind und profilierte Köpfe (21) aufweisen, um eine Sekundärauflage (21') für den inneren Umfang der Tellerfeder (60) der Membranfeder (6) gegenüber einer Primärauflage (19) zu bilden, die am Boden (8) des Deckels (7) angebracht ist, wobei die Distanzbolzen (20) radial innerhalb des Auflagevorsprungs (17) der Druckplatte (5) angeordnet sind und wobei die Membranfeder (6) erweiterte Öffnungen (18) in der Nähe des inneren Umfangs ihrer Tellerfeder (60) der Membranfeder (6) aufweist, durch welche die Distanzbolzen (20) hindurchgehen,
**dadurch gekennzeichnet, daß** die Federstreifen (16) axial zwischen der Druckplatte (5) und den Köpfen (21) der Distanzbolzen (20) und radial innerhalb des Auflagevorsprungs (17) der Druckplatte (5) angeordnet sind, daß die besagten Federstreifen (16) am Boden (8) des Deckels (7) anhand von Abstandsstücken (22, 23) befestigt sind, die durch die erweiterten Öffnungen (18) der Membranfeder (6) hindurchgehen, und daß die Abstandsstücke (22, 23) axial länger als die Distanzbolzen (20) sind.

2. Mechanismus nach Anspruch 1, **dadurch gekennzeichnet, daß** sich die Federstreifen (18) von einem ihrer Enden zum anderen tangential zwischen zwei nicht aufeinanderfolgenden erweiterten Öffnungen (18) erstrecken.

3. Mechanismus nach Anspruch 1 oder 2, **dadurch gekennzeichnet, daß** die zu den Enden der Federstreifen (16) gehörenden erweiterten Öffnungen (18) beiderseits einer erweiterten Öffnung (18) angeordnet sind, durch die ein Distanzbolzen (20) hindurchgeht.

4. Mechanismus nach Anspruch 3, **dadurch gekennzeichnet, daß** die zu den Federstreifen (20) gehörenden erweiterten Öffnungen (18) asymmetrisch beiderseits einer erweiterten Öffnung angeordnet sind, durch die ein Distanzbolzen (20) hindurchgeht.

5. Mechanismus nach einem der Ansprüche 1 bis 4, **dadurch gekennzeichnet, daß** die Federstreifen (16) vor den Köpfen (21) der Distanzbolzen (20) verlaufen.

6. Mechanismus nach einem der Ansprüche 1 bis 5, **dadurch gekennzeichnet, daß** die Abstandsstücke (22, 23) aus zwei koaxialen Teilen bestehen, und zwar aus einem rohrförmigen äußeren Teil (22), der durch eine erweiterte Öffnung (18) der Membranfeder (6) hindurchgeht, und aus einem inneren Teil (23), der zur Befestigung des Abstandsstücks (22, 23) am Boden des Deckels (7) und zur Befestigung des Federstreifens (17) dient.

7. Mechanismus nach einem der Ansprüche 1 bis 6, **dadurch gekennzeichnet, daß** die Federstreifen (16) an der Druckplatte (5) durch Befestigungsorgane (24) befestigt sind, die sich jeweils axial gegenüber einem Loch (25) befinden, das in den Boden (8) des Deckels (7) in axialer Übereinstimmung mit einer erweiterten Öffnung (18) der Membranfeder (6) eingearbeitet ist.

8. Mechanismus nach einem der Ansprüche 1 bis 7, **dadurch gekennzeichnet, daß** das mittige Loch im Boden (8) des Deckels (7) nicht regelmäßig ist und Aussparungen mit einem Boden (32) aufweist, der an der Grundseite einer erweiterten Öffnung (18) der Membranfeder (6) angeordnet ist.

9. Mechanismus nach einem der Ansprüche 1 bis 8, **dadurch gekennzeichnet, daß** der Deckel (7) an seinem äußeren Umfang eine axial ausgerichtete ringförmige Einfassung (9, 10) aufweist, die mit axialen Blindschlitzen (14) für die Bildung von Nuten und die drehende Mitnahme einer zweiten Druckplatte (3) versehen ist.

10. Mechanismus nach einem der Ansprüche 1 bis 9, **dadurch gekennzeichnet, daß** die Primärauflage (19) durch Tiefziehen des Bodens (8) des Deckels (7) ausgeführt ist und daß der Deckel (7) an seinem äußeren Umfang eine axial ausgerichtete ringförmige Einfassung aufweist, welche die Druckplatte (5) vollständig umgibt.

## Claims

1. A clutch mechanism, especially for a motor vehicle, comprising a hollow cover plate (7) having a base (8) formed with a central hole for fastening the clutch mechanism on a reaction plate (1), a diaphragm (6) with an outer periphery in the form of a Belleville ring (60) mounted for pivoting motion on the cover plate by means of fastening pins (20), a pressure plate (5) which is acted on by the diaphragm (6) and which for this purpose includes an abutment element (17) for engagement thereon of the outer periphery of the Belleville ring (60) of the diaphragm (6), tangentially oriented elastic tongues (16) coupling the pressure plate (5) in rotation to the cover plate (7) with axial mobility, and fastened at one of their ends to the pressure plate (5) and at their other end to the base (8) of the cover plate (7), wherein the fastening pins (20) are fixed to the base (8) of the cover plate (7) and have heads (21) which are profiled to define a secondary abutment (21') for the inner periphery of the Belleville ring (60) of the diaphragm (6), in facing relationship with a first abutment (19) carried by the base (8) of the cover plate (7), the said fastening pins (20) being located radially inwards of the abutment element (17) of the pressure plate (5), and wherein the diaphragm (6) has widened apertures (18) in the vicinity of the inner periphery of the Belleville ring (60) of the diaphragm (6), the fastening pins (20) extending through the said apertures, **characterised in that** the elastic tongues (16) are located axially between the pressure plate (5) and the heads (21) of the fastening pins (20) and radially inwards of the abutment element (17) of the pressure plate (5), **in that** the said tongues (16) are fixed to the base (8) of the cover plate (7) by means of spacers (22, 23) extending through the widened apertures (18) of the diaphragm (6), and **in that** the spacers (22, 23) are longer axially than the fastening pins (20).

2. A mechanism according to Claim 1, **characterised in that** the elastic tongues (18) extend from one of their ends to the other tangentially between two nonconsecutive widened apertures (18).

3. A mechanism according to Claim 1 or Claim 2, **characterised in that** the widened apertures (18) associated with the ends of the elastic tongues (16) are disposed on either side of a widened aperture (18) through which a fastening pin (20) extends.

4. A mechanism according to Claim 3, **characterised in that** the widened apertures (18) associated with the ends of the elastic tongues (20) are disposed asymmetrically on either side of the widened aperture through which a fastening pin (20) extends.

5. A mechanism according to any one of Claims 1 to 4, **characterised in that** the elastic tongues (16) pass in front of the heads (21) of the fastening pins (20).

6. A mechanism according to any one of Claims 1 to 5, **characterised in that** the spacers (22, 23) are in two coaxial parts, namely a tubular outer part (22) extending through a widened aperture (18) of the diaphragm (6), and an inner part (23) which serves for fastening the spacer (22, 23) to the base of the cover plate (7) and for the fastening of the elastic tongue (17).

7. A mechanism according to any one of Claims 1 to 6, **characterised in that** the elastic tongues (16) are fixed to the pressure plate (5) by means of fastening members (24), each of which is in axial facing relationship with a hole (25) formed in the base (8) of the cover plate (7) in axial coincidence with a widened aperture (18) of the diaphragm (6).

8. A mechanism according to any one of Claims 1 to 7, **characterised in that** the central hole in the base (8) of the cover plate (7) is irregular, and has slots with a base (32) located at the base of the widened aperture (18) of the diaphragm (6).

9. A mechanism according to any one of Claims 1 to 8, **characterised in that** the cover plate (7) has at its outer periphery an axially oriented annular skirt (9, 10) having blind axial slots (14) defining mortices and driving a second pressure plate (3) in rotation.

10. A mechanism according to any one of Claims 1 to 9, **characterised in that** the primary abutment (19) is press-formed in the base (8) of the cover plate (7), and **in that** the cover plate (7) has at its outer periphery an axially oriented annular skirt completely surrounding the pressure plate (5).
